(19) Europäisches Patentamt / European Patent Office / Office européen des brevets

(11) **EP 2 667 616 B1**

(12) **EUROPEAN PATENT SPECIFICATION**

(45) Date of publication and mention
of the grant of the patent:
**18.03.2015   Bulletin 2015/12**

(51) Int Cl.:
***H04N 13/00*** *(2006.01)*

(21) Application number: **12168604.2**

(22) Date of filing: **21.05.2012**

(54) **A crosstalk reduction method and system for stereoscopic displays**

Verfahren zur Verringerung von Nebensprechen und System für stereoskopische Anzeigen

Procédé de réduction de diaphonie pour affichages stéréoscopiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.11.2013   Bulletin 2013/48**

(73) Proprietor: **Vestel Elektronik Sanayi ve Ticaret A.S.
45030 Manisa (TR)**

(72) Inventor: **Tasli, Emrah
06531 Ankara (TR)**

(74) Representative: **Cayli, Hülya
Paragon Consultancy Inc.
Koza Sokak No: 63/2
GOP
06540 Ankara (TR)**

(56) References cited:
**US-A1- 2006 268 104      US-A1- 2011 080 401
US-A1- 2011 157 500      US-A1- 2012 013 614
US-A1- 2012 099 033      US-A1- 2012 105 604**

EP 2 667 616 B1

## Description

### Technical Field

The present invention is related to crosstalk reduction for stereoscopic displays

### Prior Art

Different mediums of 3D visualization have been introduced in the market ranging from small mobile displays to large screen TVs and theatre projectors. The wide availability of these mediums encouraged content producers to invest into this fast developing field and create new user experiences. Current generation of stereoscopic displays available in the market depends on the principle of accepting left and right images as input and directing them to the correct eye individually.

Mainly two types of stereoscopic display technologies are used for 3 dimensional perceptions. The active type displays employ an electrically powered eyeglass which sequentially blacks out one of the glasses so that an image can only be seen by a single eye. The image shown on the display is synchronized with the black out order so that images are shown to correct eye to create 3 dimensional perceptions.

Another type of stereoscopic display is the polarizing or retarder-type display which comprises micro-polarisers to polarise light array stemming from the display in clockwise or counter-clockwise direction. A polarised eyeglass, one of the glasses of which passes clockwise polarised light and the other passes counter-clockwise polarise light, directs the left and right eye views in accordance with polarisation of the received light array.

No matter which technology is used to create 3 dimensional perceptions, considerable misperception occurs due to a problem called "crosstalk". Crosstalk is the distortion of the view of an eye by the image created for the other eye. Crosstalk generally occurs due to high contrast and/or brightness of the display and it significantly disturbs 3 dimensional perceptions. In the retarder type displays, left view and right view are discriminated by their polarisations. However, leakage of light from one view to the other occurs due to characteristics of polarised eyeglass filter used to separate views.

Several methods are known from the state of the art in order to reduce crosstalk. Generally the crosstalk is mapped in relation to the brightness of the intended image (the image that is to be seen at an instant) and to the brightness of the unintended image (the image that is not to be seen at the instant) and a feedback is used either to modify 3 dimensional display or the image that is shown.

The prior art document EP 2194727 A1 discloses a crosstalk reduction method in which each received image data is multiplied with a predetermined crosstalk reduction matrix to update intensity values of pixels of received image resulting in compensated crosstalk. Although the method is effectively applicable for stereoscopic displays, said method lacks change in crosstalk in accordance with user position. Consequently widely applicable crosstalk compensation cannot be achieved with said method.

Observed crosstalk is also related to the position of the user in relation to the display. Especially, the vertical viewing angle, which is the angle between an artificial line extending from the user eye to a point on display, and the normal of the display, drastically affects crosstalk performance. Therefore a user position dependent crosstalk reduction method is needed.

Prior art document EP 2421275 A2 discloses a 3 dimensional display system which determines the position of the user and adjusts displays non-transmissive region in accordance with detected user position. With the system of EP 2421275 A2, crosstalk is dynamically compensated. However the system of EP 2421275 A2 requires a complex hardware in order to modify non-transmissive region of the display.

### Brief Description of the Invention

The present invention provides a novel method and system for crosstalk reduction in especially retarder-type (polarizing) stereoscopic displays. The method comprises the steps of;

- Determining a vertical viewing angle of a user by measuring an angle between a view normal, which extends from an eye of the user to the first pixel and/or second pixel and a normal line of the display;
- Calculating a crosstalk reduction coefficient for at least the first pixel and/or the second pixel of said display based on at least one predetermined crosstalk table, which maps crosstalk between the first pixel and the second pixel, based on an intensity value of the first pixel and intensity value of the second pixel, and said calculated vertical viewing angle; and
- Updating intensity value of said first pixel or said second pixel in accordance with said calculated crosstalk reduction coefficient.

The method and system of the invention provide compensation of crosstalk in relation to the position of the user. Therefore crosstalk performance of the display is increased regardless of the position of the user; and consequently the user comfort is ensured.

## Object of the Invention

The object of the invention is to provide a user position oriented crosstalk reduction method and system for stereoscopic displays.

Another object of the invention is to provide a method and a system which ensures user comfort from all viewing angles.

Another object of the invention is to provide an easily applicable, user position oriented crosstalk reduction method and system for stereoscopic displays.

## Description of the Drawings

Figure 1 shows an exemplary stereoscopic display, a user and the viewing angle of the user.

Figure 2 shows perceived intensity values of a pixel of an image in accordance with real intensity value of the pixel and intensity value of the pixel of the unintended view from a direct (0 degrees viewing angle) case.

Figure 3 shows perceived intensity values of a pixel of an image in accordance with real intensity value of the pixel and intensity value of the pixel of the unintended view from an indirect (10 degrees viewing angle) case.

Figure 4 shows an exemplary block diagram of the system of the invention.

References in figures may possess following meanings;

| | |
|---|---|
| Display | (D) |
| User | (U) |
| View Normal | (C) |
| Display Normal | (N) |
| Viewing Angle | ($\alpha$) |
| View separating Means | (1) |
| Crosstalk reduction Means | (2) |
| Vertical Update Means | (3) |

## Detailed Description of the Invention

Image quality of 3 dimensional displays or stereoscopic displays is reduced by a factor known as "crosstalk". Crosstalk is the contamination of an image view, which is to be seen by an eye of the user, by the image view, which is to be seen by the other eye of the user. In other words, crosstalk is the interaction of left eye view and right eye view by each other.

Crosstalk performances of the stereoscopic displays strictly depend on the position of the user. Especially, the vertical position of the user directly affects occurrence of crosstalk and viewing quality.

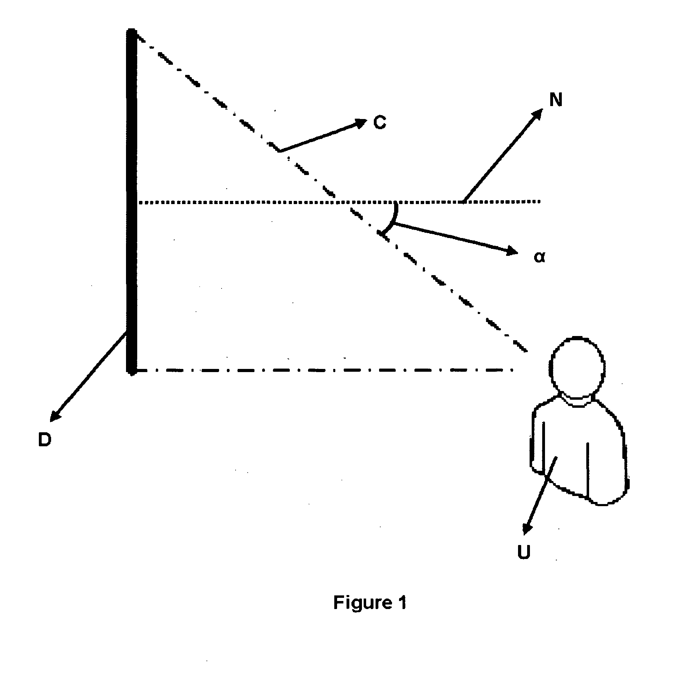

Figure 1 shows side view of an exemplary display (D) and a user (U) at an indirect viewing angle. The vertical viewing angle ($\alpha$) is preferably measured between a line extending from an eye of the user (U) to a point the user is viewing, which can be named as view normal (C), and a normal line (N) of the display (D).

As the vertical viewing angle ($\alpha$) increases, the crosstalk increases; so the user comfort is reduced. Therefore; a crosstalk reduction method which is dependent on the stated vertical viewing angle ($\alpha$) is needed.

Present invention provides a novel crosstalk reduction method for especially retarder-type stereoscopic displays (D) comprising at least a first pixel, light of which is clockwise polarised, and at least a second pixel, light of which is counter-clockwise polarised, which comprises the steps of;

- Determining a vertical viewing angle ($\alpha$) of a user (U) by measuring an angle between a view normal (C), which extends from an eye of the user (U) to the first pixel and/or second pixel and a normal line (N) of the display (D);
- Calculating a crosstalk reduction coefficient for at least the first pixel and/or the second pixel of said display (D) based on at least one predetermined crosstalk table, which maps crosstalk between the first pixel and the second pixel, based on an intensity value of the first pixel and intensity value of the second pixel, and said determined vertical viewing angle ($\alpha$); and

- Updating intensity value of said first pixel or said second pixel in accordance with said calculated crosstalk reduction coefficient

The first step is to determine a vertical viewing angle ($\alpha$). Since the vertical viewing angle ($\alpha$) directly affects crosstalk performance, the determination of said angle ($\alpha$) is essential. The angle may be determined by any method known from the state of the art such as acquiring an image of the user using an image input device (i.e. a camera) and identifying the position of the user in relation to a reference point in acquired image.

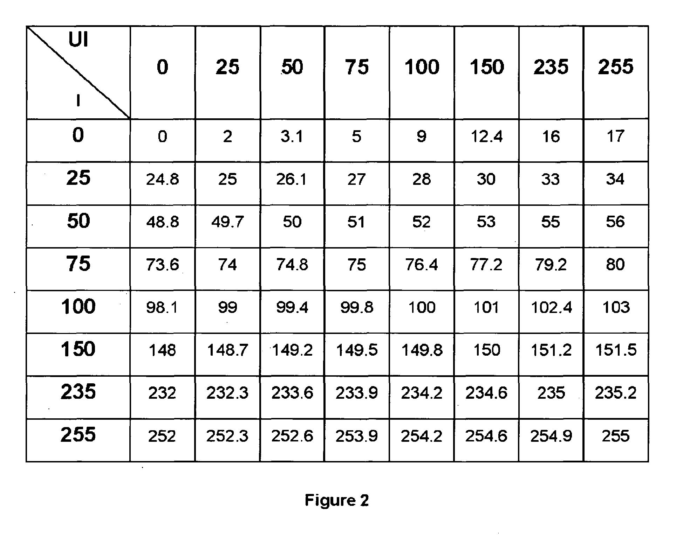

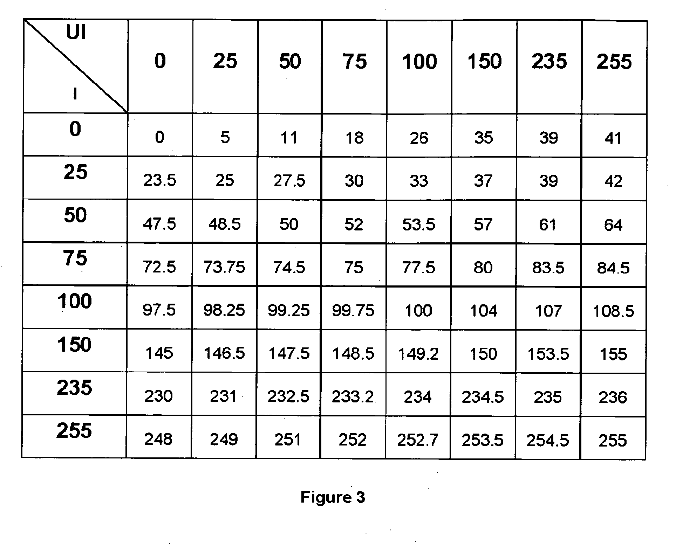

As the vertical viewing angle ($\alpha$) is determined, a crosstalk reduction coefficient is calculated. The crosstalk reduction coefficient is used to update intensity values of pixels of display; so that the crosstalk is reduced by decreasing the intensity of the unintended pixel. The calculation of the crosstalk reduction is performed using a predefined crosstalk table. The predefined crosstalk table defines perceived intensity of a pixel in accordance with the real intensity value of said pixel and real intensity value of the unintended pixel (the neighbouring pixel to said pixel which has an opposite polarisation with the said pixel). Two exemplary crosstalk tables are given in figure 2 and figure 3 wherein the table in figure 2 is a crosstalk table for zero degrees vertical viewing angle ($\alpha$) and the table in figure 3 is a crosstalk table for 10 degrees vertical viewing angle ($\alpha$). In the tables, first column stands for real intensity values of intended pixel (namely pixel of concern) and first row stands for real intensity values of unintended pixel (namely neighbouring pixel).

In order to calculate the crosstalk reduction coefficient, several methods can be used. In one embodiment, a plurality of predetermined crosstalk tables is associated with distinct angles. As the vertical viewing angle ($\alpha$) of the user (U) is determined, the crosstalk table associated to an angle, which is closest to said determined vertical viewing angle ($\alpha$), is used to calculate crosstalk reduction coefficient.

In another embodiment of the invention, a crosstalk table is generated in relation to determined vertical viewing angle ($\alpha$) by interpolating at least 2 predetermined crosstalk tables which are associated with distinct angles. Preferably, two crosstalk tables which are associated with angles, which are the closest to determined vertical viewing angle ($\alpha$), are interpolated to generate said crosstalk table.

Finally, the crosstalk reduction coefficient is calculated by determining required reduction from the crosstalk table in accordance with the real value of the pixel and the real value of the oppositely polarised neighbouring pixel. For instance; if the vertical viewing angle ($\alpha$) is 10 degrees and the crosstalk table in Figure 3 is selected, and if the real value of the pixel is 30 and the real value of the neighbouring pixel is 75, the pixel intensity should be reduced to 25 to obtain perceived intensity as 30. So the crosstalk reduction coefficient is calculated as 25/30 = 0.83.

Finally intensity values of each pixel are updated by multiplying said intensity value with calculated crosstalk reduction coefficient, which is calculated for each pixel. Finally, all pixels of all views are updated such that the perceived pixel intensities are the same with the real intensities.

Preferably, the method of the invention may comprise the step of calculating a second crosstalk reduction coefficient, which is only dependent on intensity values of said first and/or second pixels, and updating intensity value of said first pixel and/or said second pixel in accordance with said calculated second crosstalk reduction coefficient. Stated steps may be used to reduce crosstalk reduction method into two steps one of which is applied as if the user is at a normal position (in other words at 0 vertical viewing angle ($\alpha$)) as known from the prior art. The crosstalk reduction based on vertical viewing angle ($\alpha$) is performed afterwards if necessary. Stated performance may be useful for fail safe operation for cases in which multiple users are present and/or a true vertical viewing angle ($\alpha$) cannot be detected.

In an advantageous embodiment of the invention, the steps of calculating a crosstalk reduction coefficient and updating intensity values of said pixels comprises the steps of;

- Calculating a crosstalk reduction coefficient based on only the intensity values of said first and/or second pixels and independent of vertical viewing angle ($\alpha$)
- Updating intensity values of said pixels using said crosstalk reduction coefficient
- Updating intensity values of said pixels using an $n^{th}$ order approximation function, which estimates final intensity values of said first and/or second pixels in relation to vertical viewing angle ($\alpha$)

With the stated advantageous embodiment of the invention, the computational complexity of the crosstalk reduction based on vertical viewing angle is reduced. Preferably the equation (1) is used to update intensity values of said pixels;

$$I_{final}(x, y) = I_{original}(x, y) + k1 * f(\alpha) * (I_{Update}(x,y) - I_{original}(x,y)) + k2 \tag{1}$$

wherein $I_{final}(x,y)$ stands for final intensity value of said pixel, $I_{original}(x,y)$ stands for original intensity value of said pixel, $f(\alpha)$ is a function of vertical viewing angle $(\alpha)$, $I_{Update}(x,y)$ stands for updated intensity value of said pixel, wherein said update operation is performed using a crosstalk reduction coefficient based on only the intensity values of said first and/or second pixels and independent of vertical viewing angle $(\alpha)$ and k1 and k2 stand for predetermined approximation coefficients. The equation approximates required intensity deviation due to vertical viewing angle $(\alpha)$ using a first order approximation. Hence computational complexity of the crosstalk reduction is significantly reduced.

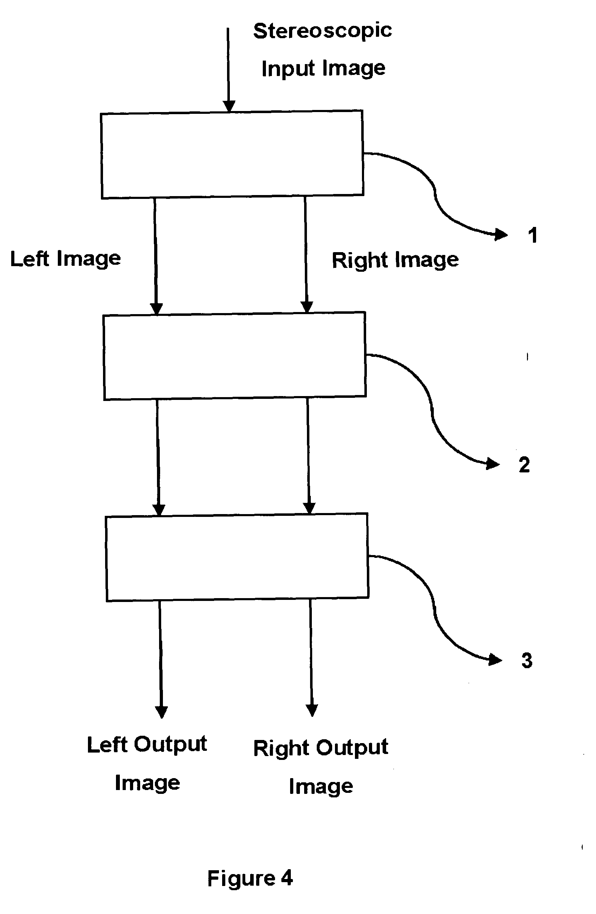

The present invention provides a system for crosstalk reduction in stereoscopic displays (D) which comprises at least a first pixel and a second pixel, a block diagram of which is given in figure 4, which essentially comprises;

-    Means for separating views (1) of a stereoscopic input image into left image comprising the first pixel and right image comprising the second pixel;
-    Means for reducing crosstalk (2) between said left image and said right image by calculating a crosstalk reduction coefficient based on intensity values of said first and/or second pixels, and updating intensity values of said first and/or second pixels using said crosstalk reduction coefficient; and
-    Vertical update means (3) which determines vertical viewing angle $(\alpha)$ by measuring an angle between a view normal (C), which extends from an eye of a user (U) to the first pixel and/or second pixel and a normal line (N) of the display (D) and which updates intensity values of said first and/or second pixels in relation to said determined vertical viewing angle $(\alpha)$

The system of the invention reduces crosstalk between left and right views of retarder type display (D) in accordance with the position of the user (U). Hence user comfort is ensured independent of user position in relation to the display.

With the method and system of the invention, crosstalk in retarder-type stereoscopic displays is effectively reduced regardless of the user position.

**Claims**

1.    A crosstalk reduction method for stereoscopic displays (D), which comprises at least a first pixel, light of which is clockwise polarised, and at least a neighbouring second pixel, light of which is counter-clockwise polarised, which comprises the steps of;

- Determining a vertical viewing angle $(\alpha)$ of a user (U) by measuring an angle between a view normal (C), which extends from an eye of the user (U) to the first pixel and/or second pixel and a normal line (N) of the display (D);
- Calculating a crosstalk reduction coefficient for at least the first pixel and/or the second pixel of said display (D) based on at least one predetermined crosstalk table, which maps crosstalk between the first pixel and the second pixel, based on an intensity value of the first pixel and an intensity value of the second pixel, and said calculated vertical viewing angle $(\alpha)$; and
- Updating intensity value of said first pixel and/or said second pixel in accordance with said calculated crosstalk reduction coefficient.

2.    A crosstalk reduction method according to claim 1 wherein said crosstalk table is selected among a plurality of predetermined crosstalk tables, each of which are associated with a distinct angle, wherein a crosstalk table which is associated to an angle, which is closest to said determined vertical viewing angle $(\alpha)$, is selected.

3.    A crosstalk reduction method according to claim 1 wherein said crosstalk table is generated in relation to determined vertical viewing angle $(\alpha)$ by interpolating at least 2 predetermined crosstalk tables which are associated with angles which are closest to said determined vertical viewing angle $(\alpha)$.

4.    A crosstalk reduction method according to claim 1 wherein the steps of calculating a crosstalk reduction coefficient and updating intensity values of said pixels comprises the steps of;

- Calculating a crosstalk reduction coefficient based on intensity values of said first and/or second pixels;
- Updating intensity values of said pixels using said crosstalk reduction coefficient
- Updating intensity values of said pixels using an $n^{th}$ order approximation function, which estimates final intensity values of said first and/or second pixels in relation to vertical viewing angle $(\alpha)$

**5.** A crosstalk reduction method according to claim 4 wherein equation (1) is used to update intensity values of said first and/or second pixels;

$$I_{final}(x,y) = I_{original}(x, y) + k1 * f(\alpha) * (I_{Update}(x,y) - I_{original}(x,y)) + k2 \qquad (1)$$

wherein $I_{final}(x,y)$ stands for final intensity value of said first and/or second pixel, $I_{original}(x,y)$ stands for original intensity value of said first and/or second pixel, $f(\alpha)$ is a function of vertical viewing angle ($\alpha$), $I_{Update}(x,y)$ stands for updated intensity value of said first and/or second pixel, wherein said update operation is performed using a crosstalk reduction coefficient based on intensity values of said first and/or second pixels and independent of vertical viewing angle ($\alpha$) and k1 and k2 stand for predetermined approximation coefficients.

**6.** A crosstalk reduction system for stereoscopic displays (D), which comprises at least a first pixel and a neighbouring second pixel; which comprises;

- Means for separating views (1) of a stereoscopic input image into left image comprising the first pixel and right image comprising the second pixel;
- Means for reducing crosstalk (2) between said left image and said right image by calculating a crosstalk reduction coefficient based on intensity values of said first and/or second pixels, and updating intensity values of said first and/or second pixels using said crosstalk reduction coefficient; and
- Vertical update means (3) which determines vertical viewing angle ($\alpha$) by measuring an angle between a view normal (C), which extends from an eye of a user (U) to the first pixel and/or second pixel and a normal line (N) of the display (D) and which updates intensity values of said first and/or second pixels in relation to said determined vertical viewing angle ($\alpha$)

**Patentansprüche**

**1.** Übersprech-Reduktionsverfahren für Stereo-Anzeigen (D), welche zumindest ein erstes Pixel, dessen Licht in Uhrzeigerrichtung polarisiert ist, und zumindest ein benachbartes zweites Pixel aufweist, dessen Licht im Gegen-Uhrzeigersinn polarisiert ist, wobei das Verfahren die folgenden Schritte aufweist

- Bestimmen eines vertikalen Betrachtungswinkels ($\alpha$) eines Benutzers (U) durch Messen eines Winkels zwischen einer Betrachtungsnormalen (C), welche sich von einem Auge des Benutzers (U) zu dem ersten Pixel und/oder dem zweiten Pixel und einer Normalen (normal line; N) der Anzeige oder des Displays (D) erstreckt;
- Berechnen eines Übersprech-Reduktions-Koeffizienten für zumindest das erste Pixel und/oder das zweite Pixel des Displays oder der Anzeige (D), basierend auf zumindest einer vorbestimmten Übersprech-Tabelle, welche ein Übersprechen zwischen dem ersten Pixel und dem zweiten Pixel mapped (zuordnet oder abbildet), basierend auf einem Intensitätswert des ersten Pixels und einem Intensitätswert des zweiten Pixels, und dem berechneten vertikalen Betrachtungswinkel ($\alpha$);
- Aktualisieren des Intensitätswerts der ersten Pixels und/oder des zweiten Pixels in Übereinstimmung mit oder entsprechend dem berechneten Übersprech- Reduktions-Koeffizienten.

**2.** Übersprech-Reduktionsverfahren nach Anspruch 1, wobei die Übersprech-Tabelle ausgewählt ist aus einer Mehrzahl von vorbestimmten Übersprech-Tabellen, wobei jede einem bestimmten Winkel zugeordnet ist, wobei eine Übersprech-Tabelle, die einem Winkel zugeordnet ist, der am Nächsten dem bestimmten vertikalen Betrachtungswinkel ($\alpha$) ist, ausgewählt wird.

**3.** Übersprech-Reduktionsverfahren nach Anspruch 1, wobei die Übersprech-Tabelle erzeugt wird mit Bezug auf den bestimmten vertikalen Betrachtungswinkel ($\alpha$) durch ein Interpolieren an oder bei zumindest zwei vorbestimmten oder gegebenen Übersprech-Tabellen, welche den Winkeln zugeordnet oder mit diesen Winkeln assoziiert sind, welche am Nächsten an dem bestimmten vertikalen Betrachtungswinkel ($\alpha$) sind.

**4.** Übersprech-Reduktionsverfahren nach Anspruch 1, wobei die Schritte des Berechnens eines Übersprech-Reduktions-Koeffizienten und des Aktualisierens (Updatings) eines Intensitätswerts der Pixel die folgenden Schritte umfasst

- Berechnen eines Übersprech-Reduktions-Koeffizienten, gestützt auf Intensitätswerte des ersten und/oder zweiten Pixels;

- Aktualisieren oder Updating des oder der Intensitätswerte der Pixel unter Verwendung des Übersprech- Reduktions-Koeffizienten;

- Aktualisieren oder Updating des oder der Intensitätswerte der Pixel unter Verwendung einer Näherungsfunktion der n-ten Ordnung, welche den abschließenden oder finalen Intensitätswert annähert oder abschätzt, und zwar bezogen auf den ersten und/oder den zweiten Pixel mit Blick oder in Relation zum vertikalen Betrachtungswinkel ($\alpha$).

**5.** Übersprech-Reduktionsverfahren nach Anspruch 4, wobei eine Gleichung (1) verwendet wird, den oder die Intensitätswerte des ersten und/oder zweiten Pixels zu aktualisieren;

$$I_{final}(x,y) = I_{original}(x, y) + k1 * f(\alpha) * (I_{Update}(x,y) - I_{original}(x,y)) + k2 \qquad (1),$$

wobei

$I_{final}(x,y)$ für den finalen Intensitätswert des ersten und/oder zweiten Pixels steht,
$I_{original}(x,y)$ für den originalen Intensitätswert des ersten und/oder zweiten Pixels steht,
$f(\alpha)$ eine Funktion des vertikalen Betrachtungswinkels ($\alpha$) ist, $I_{Update}(x,y)$ für den aktualisierten Intensitätswert des ersten und/oder zweiten Pixels steht,
wobei die Update-Operation ausgeführt wird unter Verwendung des Übersprech- Reduktions-Koeffizienten, gestützt auf einen Intensitätswert des ersten und/oder zweiten Pixels und unabhängig von dem vertikalen Betrachtungswinkel ($\alpha$) ist und wobei k1 und k2 vorbestimmte oder gegebene Näherungs-Koeffizienten sind.

**6.** Übersprech-Reduktionssystem für ein Stereo-Display (D) oder eine solche Anzeige, welches zumindest ein ersten Pixel und einen benachbarten zweiten Pixel aufweist, wobei das System folgendes enthält

- eine Einrichtung (1) zum Trennen von Ansichten eines Stereo-Eingangsbildes in ein linkes Bild mit dem ersten Pixel und rechtes Bild mit dem zweiten Pixel;

- eine Einrichtung (2) zur Reduzierung des Übersprechens zwischen dem linken Bild und dem rechten Bild, dies durch Berechnung eines Übersprech-Reduktions- Koeffizienten, gestützt auf einen oder Intensitätswert(e) des ersten und/oder zweiten Pixels, und Aktualisieren oder Updaten des oder der Intensitätswerte des ersten und/oder zweiten Pixels unter Verwendung des Übersprech-Reduktions- Koeffizienten;

- und eine Vertikal-Aktualisierungseinrichtung (3), welche einen vertikalen Betrachtungswinkel ($\alpha$) durch Messen eines Winkels zwischen einer Betrachtungsnormalen (C) bestimmt, die sich von einem Auge eines Benutzers (U) zu dem ersten Pixel und/oder dem zweiten Pixel erstreckt, und einer Normalen (normal line; N) des Displays oder der Anzeige (D), und welche den oder die Intensitätswert(e) des ersten und/oder des zweiten Pixels in Relation oder in Bezug auf den vorbestimmten oder gegebenen vertikalen Betrachtungswinkel ($\alpha$) aktualisiert.

## Revendications

**1.** Procédé de réduction de diaphonie pour des affichages stéréoscopiques (D), qui comprend au moins un premier pixel dont la lumière est polarisée dans le sens des aiguilles d'une montre, et au moins un deuxième pixel voisin dont la lumière est polarisée dans le sens inverse des aiguilles d'une montre, qui comprend les étapes suivantes :

- la détermination d'un angle de vision verticale ($\alpha$) d'un utilisateur (U) en mesurant un angle entre une normale de vue (C) qui s'étend d'un oeil de l'utilisateur (U) au premier pixel et/ou au deuxième pixel et une ligne normale (N) de l'affichage (D) ;

- le calcul d'un coefficient de réduction de diaphonie pour au moins le premier pixel et/ou le deuxième pixel dudit affichage (D) sur la base d'au moins une table de diaphonie prédéterminée, qui cartographie la diaphonie entre le premier pixel et le deuxième pixel, sur la base d'une valeur d'intensité du premier pixel et d'une valeur d'intensité du deuxième pixel, et ledit angle de vision verticale ($\alpha$) calculé ; et

- la mise à jour de la valeur d'intensité dudit premier pixel et/ou dudit deuxième pixel en fonction dudit coefficient de réduction de diaphonie calculé.

**2.** Procédé de réduction de diaphonie selon la revendication 1, dans lequel la table de diaphonie est sélectionnée parmi une pluralité de tables de diaphonie prédéterminées, chacune d'elles étant associée à un angle distinct, dans lequel une table de diaphonie qui est associée à un angle, qui est le plus proche dudit angle de vision verticale ($\alpha$) déterminé, est sélectionnée.

3. Procédé de réduction de diaphonie selon la revendication 1, dans lequel ladite table de diaphonie est générée en relation avec un angle de vision verticale ($\alpha$) déterminé en interpolant au moins deux tables de diaphonie prédéterminées qui sont associées à des angles qui sont les plus proches dudit angle de vision verticale ($\alpha$) déterminé.

4. Procédé de réduction de diaphonie selon la revendication 1, dans lequel les étapes de calcul d'un coefficient de réduction de diaphonie et de mise à jour des valeurs d'intensité desdits pixels comprennent les étapes suivantes :

- le calcul d'un coefficient de réduction de diaphonie sur la base de valeurs d'intensité desdits premier et/ou deuxième pixels ;
- la mise à jour des valeurs d'intensité desdits pixels en utilisant ledit coefficient de réduction de diaphonie ;
- la mise à jour des valeurs d'intensité desdits pixels en utilisant une fonction d'approximation de $n^{\text{ième}}$ ordre, qui estime des valeurs d'intensité finales desdits premier et/ou deuxième pixels en relation avec un angle de vision verticale ($\alpha$).

5. Procédé de réduction de diaphonie selon la revendication 4, dans lequel l'équation (1) est utilisée pour mettre à jour les valeurs d'intensité desdits premier et/ou deuxième pixels :

$$I_{final}(x,y) = I_{original}(x, y) + k1 * f(\alpha) * (I_{Update}(x,y) - I_{original}(x,y)) + k2 \qquad (1)$$

où $I_{final}(x,y)$ représente la valeur d'intensité finale desdits premier et/ou deuxième pixels, $I_{original}(x,y)$ représente la valeur d'intensité initiale desdits premier et/ou deuxième pixels, $f(\alpha)$ représente une fonction de l'angle de vision verticale ($\alpha$), $I_{Update}(x,y)$ représente une valeur d'intensité mise à jour desdits premier et/ou deuxième pixels, dans lequel ladite opération de mise à jour est effectuée en utilisant un coefficient de réduction de diaphonie basé sur des valeurs d'intensité desdits premier et/ou deuxième pixels et indépendant de l'angle de vision verticale ($\alpha$), et k1 et k2 sont des coefficients d'approximation prédéterminés.

6. Système de réduction de diaphonie pour des affichages stéréoscopiques (D), qui comprend au moins un premier pixel et un deuxième pixel voisin ; qui comprend :

- des moyens de séparation de vues (1) d'une image d'entrée stéréoscopique en une image de gauche comprenant le premier pixel et une image de droite comprenant le deuxième pixel ;
- des moyens de réduction de diaphonie (2) entre ladite image de gauche et ladite image de droite en calculant un coefficient de réduction de diaphonie sur la base de valeurs d'intensité desdits premier et/ou deuxième pixels, et de mise à jour des valeurs d'intensité desdits premier et/ou deuxième pixels en utilisant ledit coefficient de réduction de diaphonie ; et
- des moyens de mise à jour verticale (3) qui déterminent un angle de vision verticale ($\alpha$) en mesurant un angle entre une normale de vue (C) qui s'étend d'un oeil d'un utilisateur (U) au premier pixel et/ou au deuxième pixel et une ligne normale (N) de l'affichage (D), et qui mettent à jour des valeurs d'intensité desdits premier et/ou deuxième pixels en relation avec ledit angle de vision verticale ($\alpha$) déterminé.

Figure 1

| UI / I | 0 | 25 | 50 | 75 | 100 | 150 | 235 | 255 |
|---|---|---|---|---|---|---|---|---|
| 0 | 0 | 2 | 3.1 | 5 | 9 | 12.4 | 16 | 17 |
| 25 | 24.8 | 25 | 26.1 | 27 | 28 | 30 | 33 | 34 |
| 50 | 48.8 | 49.7 | 50 | 51 | 52 | 53 | 55 | 56 |
| 75 | 73.6 | 74 | 74.8 | 75 | 76.4 | 77.2 | 79.2 | 80 |
| 100 | 98.1 | 99 | 99.4 | 99.8 | 100 | 101 | 102.4 | 103 |
| 150 | 148 | 148.7 | 149.2 | 149.5 | 149.8 | 150 | 151.2 | 151.5 |
| 235 | 232 | 232.3 | 233.6 | 233.9 | 234.2 | 234.6 | 235 | 235.2 |
| 255 | 252 | 252.3 | 252.6 | 253.9 | 254.2 | 254.6 | 254.9 | 255 |

Figure 2

| UI<br><br>I | 0 | 25 | 50 | 75 | 100 | 150 | 235 | 255 |
|---|---|---|---|---|---|---|---|---|
| 0 | 0 | 5 | 11 | 18 | 26 | 35 | 39 | 41 |
| 25 | 23.5 | 25 | 27.5 | 30 | 33 | 37 | 39 | 42 |
| 50 | 47.5 | 48.5 | 50 | 52 | 53.5 | 57 | 61 | 64 |
| 75 | 72.5 | 73.75 | 74.5 | 75 | 77.5 | 80 | 83.5 | 84.5 |
| 100 | 97.5 | 98.25 | 99.25 | 99.75 | 100 | 104 | 107 | 108.5 |
| 150 | 145 | 146.5 | 147.5 | 148.5 | 149.2 | 150 | 153.5 | 155 |
| 235 | 230 | 231 | 232.5 | 233.2 | 234 | 234.5 | 235 | 236 |
| 255 | 248 | 249 | 251 | 252 | 252.7 | 253.5 | 254.5 | 255 |

Figure 3

Stereoscopic
Input Image

Left Image

Right Image

1

2

3

Left Output
Image

Right Output
Image

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2194727 A1

- EP 2421275 A2